# EUROPÄISCHE PATENTSCHRIFT

(11) **EP 2 147 875 B1**
(45) Veröffentlichungstag und Bekanntmachung des Hinweises auf die Patenterteilung: **03.04.2013**
(21) Anmeldenummer: 09450132.7
(22) Anmeldetag: 22.07.2009
(51) Int. Cl.: B65G 19/10, B65G 19/24, B65G 17/42

(54) **Mitnehmer**
Actuator
Entraîneur

(30) Priorität: 25.07.2008 AT 11612008
(43) Veröffentlichungstag der Anmeldung: 27.01.2010
(73) Patentinhaber: pewag Austria GmbH, 8605 Kapfenberg (AT)
(72) Erfinder: Pengg, Ägyd, 9020 Klagenfurt (AT)
(74) Vertreter: Patentanwaltskanzlei Matschnig & Forsthuber OG

(56) Entgegenhaltungen:
- DE-A1- 3 324 109
- DE-B- 1 021 791
- DE-C- 952 518
- DE-C1- 19 826 760
- DE-U1-202006 017 122

## Beschreibung

Die Erfindung betrifft einen Mitnehmer zum Befestigen eines Bauteils an einer Rundgliedkette gemäß dem Oberbegriff des Anspruchs 1.

Mitnehmeranordnungen dienen beispielsweise zum Anbringen von Bauteilen wie Kratzern, Bechern oder Tragrollen an umlaufenden Rundgliederketten in Fördereinrichtungen. Die Bauteile nehmen das Fördergut zum Weitertransport auf.

Die AT 262 880 beschreibt eine sehr einfache Ausführungsform eines solchen Mitnehmers, bei der an den Kettengliedern zum Befestigen von solchen Mitnehmerbauteilen Befestigungsbolzen angeschweißt sind. Naheliegenderweise ist diese Befestigungsart wegen der erforderlichen Schweißarbeiten sehr aufwendig, weiters muss die Kette geöffnet werden, wenn beispielsweise ein Bolzen abbricht oder sonst ein Defekt auftritt.

Es ist also von besonderer Wichtigkeit, dass Mitnehmeranordnungen so ausgestaltet werden, dass sie einfach montiert und gewechselt werden können, ohne dass die Kette geöffnet oder sonst wie manipuliert werden muss. Meistens werden dafür zwei Klemmteile vorgesehen, die durch eine Schraubverbindung miteinander verbunden und so an der Kette festgeklemmt werden. An den Klemmteilen werden dann die Mitnehmerbauteile montiert.

Die DE 2119499 zeigt eine solche Lösung, bei der zwei Backen ein Kettenglied formschlüssig umgreifen und die Backen mit einer Spannschraube, die durch das Kettenglied reicht, miteinander verbunden werden. Eine der Backen ist fest mit dem Mitnehmerbauteil, in diesem Fall einem Kratzeisen, verbunden.

Ähnliche Lösungen beschreibt die EP 367 755 B1 der Anmelderin. Hier werden zwei Klemmteile, die beiderseits der Hauptebene eines Kettengliedes angeordnet sind, mittels einer durch die Gliedöffnung verlaufenden Schraubverbindung verbunden. Zumindest einer der Schenkel des Kettengliedes wird von den Klemmteilen komplett umschlossen, während der andere Schenkel um maximal 180° umfasst ist. An den Klemmteilen sind dann Anschlussbolzen angebracht, an denen Mitnehmerbauteile fixiert werden können.

Die DE 17 12 996 U beschreibt einen Doppelkettenförderer mit mehreren Mitnehmern, die mit je zwei Zangenteilen, einer davon im Wesentlichen gerade, einer hakenförmig ausgestaltet, an einer Rundgliedkette befestigt werden. Die Zangenteile sind dabei mit zwei Bolzen mit dem Mitnehmer verbunden, wobei der erste Bolzen fix und unlösbar mit dem Mitnehmer mer verbunden ist, während der zweite Bolzen nach erfolgter Montage die beiden Zangenteile fixiert. Ähnliche Lösungen zeigen DE 952 518, wo eine Vorrichtung zur Befestigung von Stauscheiben an einer Rundgliederkette beschrieben ist, und DE 1 021 791 mit einer Vorrichtung zum Befestigen eines Mitnehmerteils an einer Rundgliederkette, bestehend aus zwei Laschen, die in ein Kettenglied geklemmt und über einen Bolzen an einem Mitnehmerteil fixiert werden.

DE 198 26 760 C1 zeigt einen Mitnehmer zum Betestigen eines Bauteils an einer Rundgliedkette gemäß dem Oberbegrif des Anspruchs 1, sowie einen Kettenförderer mit zwei über eine zentrale Schwenkachse miteinander verbundenen Mitnehmern, an denen Gewindebolzen zur Befestigung von Förderorganen angebracht sind.

Die Nachteile der beschriebenen Lösungen sind mannigfaltig: Einerseits bestehen sie aus einer Vielzahl von verschiedenen Einzelteilen, die aufwendig in der Herstellung sind und vom Produzenten im zerlegten Zustand an den Kunden geliefert werden, der die Anordnungen selber zusammenstellen muss, wobei eine rasche, unkomplizierte und fehlerfreie Montage nicht sichergestellt ist. Weiters ist es bei den neueren Varianten, bei denen die Klemmteile durch Schrauben zusammengehalten werden, notwendig, diese Schrauben von Zeit zu Zeit nachzuziehen, was wieder Zeit- und Personalaufwand mit sich bringt.

Es ist daher Aufgabe der Erfindung, einen Mitnehmer zu schaffen, der aus wenigen zu montierenden Einzelteilen besteht, unkompliziert zu montieren ist und gegenüber herkömmlichen Lösungen eine Gewichts- und Zeitersparnis mit sich bringt.

Diese Aufgabe wird mit einem Mitnehmer der eingangs genannten Art erfindungsgemäß dadurch gelöst, dass als Verbindungsmittel zur Verbindung der Klemmteile ein Verbindungsbolzen vorgesehen ist, der außerhalb der äußeren Breite des Kettengliedes parallel zu den Längsschenkeln des Kettengliedes durch in den Klemmteilen vorgesehene Bohrungen verläuft, wobei zumindest ein Klemmteil um die Achse des Verbindungsbolzens drehbar ist.

Die Erfindung ermöglicht einen Mitnehmer, der wenige Einzelteile aufweist und einfach und zeitsparend in der Montage ist. Durch den Verbindungsbolzen können die Klemmteile einfach miteinander verbunden werden; zur Montage an einer Kette wird der Mitnehmer einfach aufgeklappt, indem zumindest ein Klemmteil um die Achse des Verbindungsbolzens gedreht wird. Es ist also zumindest einer der Klemmteile um den Verbindungsbolzen drehbar, wobei der Mitnehmer grundsätzlich auch so ausgeführt sein kann, dass beide Klemmteile um den Verbindungsbolzen bewegbar sind. Das Montieren eines Mitnehmerbauteils, beispielsweise eines Bechers, am Anschlussmittel führt dazu, dass die Klemmteile in ihrer Bewegung fixiert werden: Durch den montierten Mitnehmerbauteil können die Klemmteile nicht mehr aufgeklappt werden. Daher sind keine weiteren Befestigungsmittel notwendig. Weiters verhindert der Verbindungsbolzen formschlüssig das Verdrehen der Teile über dem Anschlussmittel. Auch wenn sich ungewollt die Mitnehmerbauteile lockern sollten, wird ein Lösen des Mitnehmers vom Kettenglied verhindert. Dadurch wird ein sicheres Befestigen im Betrieb sichergestellt. Der Verbindungsbolzen ist günstigerweise so ausgestaltet, dass eine Verwendung des Mitnehmers über einen längeren Zeitraum möglich ist. Beispielsweise kann der Verbindungsbolzen mit einem Korrosionsschutz versehen sein, z.B. einer Verzinkung, oder aus einem rostbeständigen Material hergestellt werden.

In einer Variante der Erfindung ist der Verbindungsbolzen starr mit einem Klemmteil verbunden. Diese Verbindung kann beispielsweise dadurch erfolgen, dass der Verbindungsbolzen an einen Klemmteil mitangeschmiedet ist, oder einseitig eingeklebt, eingelötet oder angeschweißt wird. Der andere Klemmteil ist dann um den Verbindungsbolzen aufklappbar, während der zweite Klemmteil starr mit dem Bolzen verbunden ist. Da so die Montage des Mitnehmers einfach durch Auf- und Zuklappen möglich ist und die Klemmteile nicht mehr an der Kette zusammengesetzt werden müssen, können die Mitnehmer werkseitig vormontiert werden, sodass die Verwendung durch die Verbraucher stark vereinfacht und der Zeitaufwand reduziert wird.

In einer weiteren Variante der Erfindung sind beide Klemmteile um den Verbindungsbolzen drehbar. Dadurch wird die Montage des Mitnehmers maßgeblich erleichtert: Die Klemmteile haben eine größere Bewegungsfreiheit und können aufgeklappt und an der Kette angebracht werden, durch Zuklappen und das Montieren eines Mitnehmerbauteils wird dann die Anordnung fixiert.

Der Verbindungsbolzen ist grundsätzlich außerhalb der äußeren Breite des Kettengliedes angeordnet. Im Speziellen ist es von Vorteil, wenn er außerhalb der äußeren Breite des Kettengliedes zwischen Kettenglied und Anschlussmittel angeordnet ist. Dadurch wird der Platzbedarf des Mitnehmers reduziert, da er auf der dem montierten Mitnehmerbauteil gegenüber liegenden Seite des Kettengliedes kaum über das Kettenglied hinausragt.

Obwohl im Prinzip nur einer der Klemmteile des Mitnehmers mit einem Anschlussmittel ausgestattet sein muss, um die erfindungsgemäße Funktion sicherzustellen, sind günstigerweise die Klemmteile im Wesentlichen gleich ausgebildet und jeweils mit einem Anschlussmittel für den Bauteil versehen. Dadurch sind je Mitnehmer statt einem zwei Anschlussmittel verfügbar, wodurch die Stabilität des Systems verbessert und die Betriebssicherheit erhöht wird, da sich die Belastungen auf zwei statt auf ein Anschlussmittel verteilen. Weiters wird die Herstellung der Mitnehmer billiger, da beide Klemmteile gleich ausgebildet sind und daher nur eine Schmiedeform benötigt wird.

Es ist weiters günstig, wenn es sich bei den Anschlussmitteln um Gewindebolzen handelt. Dadurch können die Mitnehmerbauteile einfach durch das Festschrauben von Muttern fixiert werden, was eine einfache und etablierte Lösung darstellt. Grundsätzlich kann es sich aber bei den Anschlussmitteln auch um andere Vorrichtungen handeln, neben der Gewindebolzen-Mutter-Variante kann beispielsweise auch eine Bolzen/Keil-Verbindung vorgesehen sein, um nur eine von mehreren Möglichkeiten zu nennen.

Dabei ist es weiters günstig, wenn die Bohrungen in den Klemmteilen zur Aufnahme des Verbindungsbolzens als Sackbohrungen ausgeführt sind. Dadurch ist sichergestellt, dass der Bolzen nicht herausfallen kann und die Klemmteile ordentlich verbunden sind. Weiters können so die Klemmteile schon werkseitig leichter zusammengestellt werden.

Um die Verbindung der Klemmteile noch zu verbessern, ist in einer Variante der Erfindung eine Feder vorgesehen, welche die Klemmteile in einer Ausgangsposition hält, die dem montierten Zustand entspricht, wobei die Feder eine Vorspannung ausübt, die überwunden werden muss um die Klemmteile um den Verbindungsbolzen aufzuklappen. Eine solche Feder ist einfach über die Schmiedeform zu montieren und sichert die beiden Schmiedeteile samt Verbindungsbolzen gegen ein Auseinanderfallen während Bearbeitung, Lagerung und Transport. Dabei kann es sich im Prinzip um eine beliebige Federart handeln, beispielsweise eine Blatt- oder Schraubenfeder. Bei der Montage kann der Mitnehmer einfach aufgeklappt und in das vorgesehene Kettenglied eingesetzt werden, wo er durch die Vorspannung der Feder wieder zusammenschnappt. Danach dient die Feder auch als Zwischensicherung der Befestigung im Ketteneinhang. Besonders vorteilhaft ist es, wenn es sich bei der Feder um eine Schraubenfeder handelt, die um den Bolzen gewickelt ist.

In einer weiteren Variante der Erfindung erstreckt sich der Mitnehmer über mehrere Kettenglieder, wobei je Klemmteil mindestens zwei Mittelteile mit je zwei Seitenstegen vorgesehen sind, wobei die Mittelteile in die Öffnungen von benachbarten gleichgerichteten Kettengliedern eingreifen. Eine solche Mitnehmeranordnung, die sich über mehrere Kettenglieder erstreckt, kann vorteilhaft verwendet werden, wenn die Mitnehmerbauteile und damit die Mitnehmer besonders stark belastet werden. Dies tritt bei besonders großen Bechern bzw. Kratzern auf. Der Hauptvorteil einer Zweigliedbefestigung liegt in den geringeren Beschleunigungskräften bei der Umlenkung an verzahnte oder unverzahnte Räder.

Dabei kann es günstig sein, wenn die Mittelteile der Klemmvorrichtungen der Klemmteile derart ausgestaltet sind, dass zumindest ein Mittelteil je Klemmteil einen zapfenförmigen Abschnitt aufweist und/oder mindestens ein Mittelteil desselben Klemmteils eine Aufnahme für einen solchen zapfenförmigen Abschnitt aufweist, wobei bei einem Mitnehmer im montierten Zustand jeweils Mittelteile mit zapfenförmigem Abschnitt des einen Klemmteils mit Mittelteilen mit Aufnahmen für zapfenförmige Abschnitte des anderen Klemmteils zusammenwirken. Dadurch kann eine beinahe formschlüssige Verbindung der Mittelteile der beiden Klemmteile erreicht werden, wodurch die Stabilität und Betriebssicherheit des Mitnehmers verbessert werden kann. Die Kombination aus Zapfen und Aufnahme ist nur eine von mehreren möglichen Variationen, die eine im Wesentlichen formschlüssige Verbindung der Mittelteile der Klemmvorrichtungen erlauben.

Besonders günstig ist es, wenn im Falle eines solchen Mitnehmers, der sich über mehrere Kettenglieder erstreckt, die Mittelteile je Klemmteil verschieden ausgeführt sind, sodass zumindest ein Mittelteil einen zapfenförmigen Abschnitt aufweist und zumindest ein Mittelteil eine Aufnahme für einen solchen zapfenförmigen Abschnitt aufweist. Natürlich sind verschiedene Kombinationen dieser Anordnungen möglich, beispielsweise dass beide Mittelteile eines Klemmteils zapfenförmig ausgestaltet sind.

Die Erfindung samt ihren weiteren Merkmalen ist im Folgenden anhand von nicht einschränkenden Ausführungsbeispielen näher erläutert, die in der Zeichnung veranschaulicht sind. Dabei zeigt
Fig. 1 eine schematische Seitenansicht eines erfindungsgemäßen Mitnehmers,
Fig. 2 einen Schnitt durch den Mitnehmer aus Fig. 1 entlang der Linie A-A,
Fign. 3a und 3b eine perspektivische Darstellung des erfindungsgemäßen Mitnehmers im aufgeklappten Zustand (Fig. 3a) sowie im montierten Zustand (Fig. 3b) an einer Rundgliedkette,
Fig. 4 einen Schnitt durch den Mitnehmer im Bereich des Verbindungsbolzens entlang der Linie B-B in Fig. 2,
Fig. 5 eine schematische Seitenansicht eines erfindungsgemäßen Zweiglied-Mitnehmers,
Fig. 6 einen Schnitt durch den Mitnehmer aus Fig. 5 entlang der Linie C-C,
Fign. 7a und 7b eine perspektivische Darstellung des erfindungsgemäßen Zweiglied-Mitnehmers im aufgeklappten Zustand (Fig. 7a) und im montierten Zustand (Fig. 7b) an einer Rundgliedkette, und
Fig. 8 einen Schnitt durch den Zweiglied-Mitnehmer im Bereich des Verbindungsbolzens entlang der Linie D-D in Fig. 6.

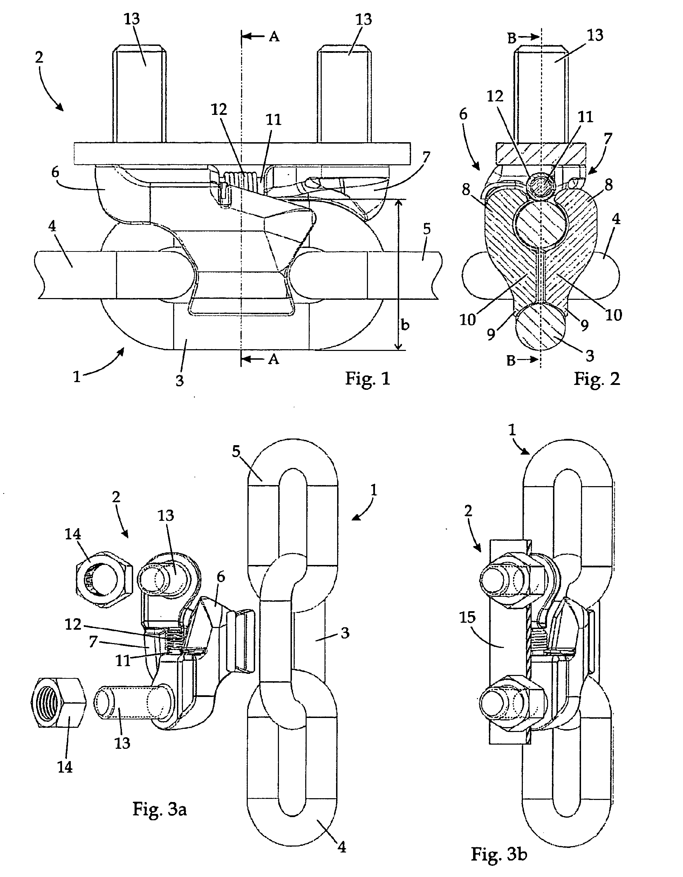

In Fig. 1 ist ein Abschnitt einer Rundgliedkette 1 eines nicht weiter gezeigten Kettenförderers gezeigt, der z.B. ein Kratzketten- oder ein Becherförderer sein kann. Meist sind zwei parallel in Abstand voneinander umlaufende Förderketten vorgesehen, an welchen Bauteile, wie Kratzer oder Förderbecher, befestigt sind.

Die Rundgliedkette 1 besteht aus abwechselnd angeordneten stehenden und liegenden Kettengliedern, wobei sich die Bezeichnungen "stehend" und "liegend" auf die Förderebene des Kettenförderers beziehen und rein willkürlich gewählt sind.

Im dargestellten Fall ist ein Mitnehmer 2 an einem stehenden Kettenglied 3 angebracht; an das Kettenglied schließen zu beiden Seiten gegengerichtete Nachbarglieder 4, 5 an. Die Nachbarglieder 4, 5 sind nur teilweise dargestellt.

Der Mitnehmer 2 besteht aus zwei Klemmteilen 6, 7. In der Darstellung in Fig. 1 ist nur einer der Klemmteile vollständig erkennbar, der zweite 7 ist von der Kette und dem ersten Klemmteil 6 verdeckt. Wie aus Fig. 2 (Schnitt entlang der Linie A-A in Fig. 1) erkennbar ist, weist jeder Klemmteil 6, 7 einen oberen Seitensteg 8, einen unteren Seitensteg 9 und einen in der Öffnung des Kettengliedes 3 liegenden Mittelteil 10 auf, die zusammen eine Klemmvorrichtung bilden. Die Bezeichnungen "oberer' und "unterer" beziehen sich dabei auf die Anordnung in der Zeichnung. Im montierten Zustand sind die Klemmteile 6, 7 derart angeordnet, dass die Stirnflächen der Mittelteile 10 einander zugewandt sind. Die oberen Seitenstege 8 sind derart ausgebildet, dass sie den oberen Längsschenkel des Kettengliedes 3 in Längsrichtung gesehen beinahe vollständig umschließen, während die unteren Seitenstege 9 den unteren Längsschenkel des Kettengliedes 3 zumindest teilweise umschließen.

Der obere Seitensteg 8 weist eine ebene Auflagefläche auf, von welcher ein Anschlussmittel, im vorliegenden Fall ein Gewindebolzen 13, absteht. Der Gewindebolzen 13 dient zur Montage eines Mitnehmerbauteils, beispielsweise eines Bechers oder Kratzers, welcher mit einer Mutter 14 fixiert werden kann. Ein solcher Mitnehmerbauteil ist in den Figuren allerdings nicht dargestellt. Grundsätzlich ist die Verbindung aus Gewindebolzen 13 mit Mutter 14 auch nur eine von mehreren bekannten Varianten, möglich wäre beispielsweise auch eine Bolzen/ Keil-Verbindung.

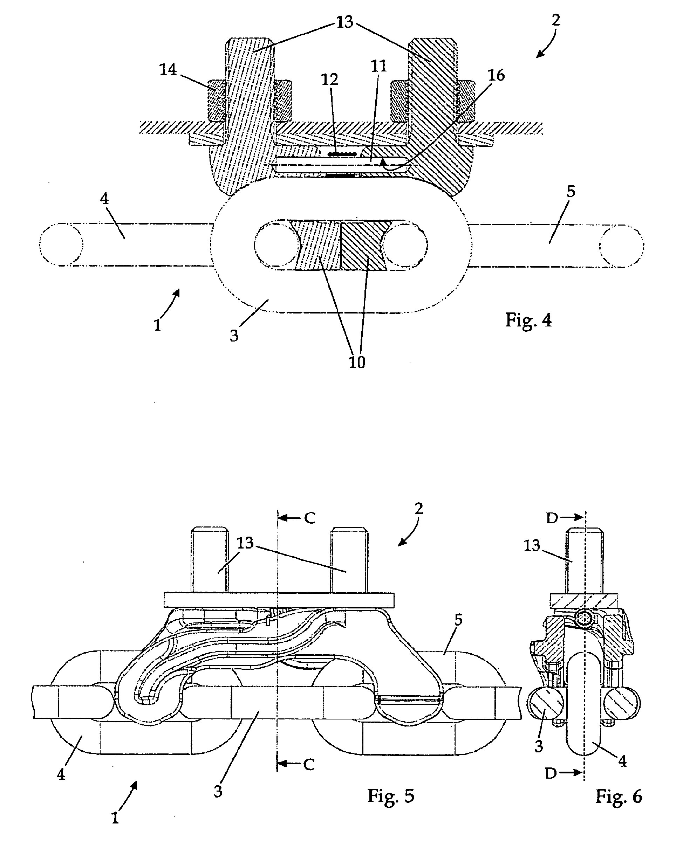

Die Verbindung der Klemmteile 6, 7 erfolgt mittels einem längsgerichteten Verbindungsbolzen 11. Wie auch aus Fig. 2 erkennbar ist, liegt dieser Verbindungsbolzen 11 außerhalb der äußeren Breite b des Kettenglieds 3 parallel zu den Längsschenkeln des Kettenglieds 3 zwischen Mitnehmer 2 und Kettenglied 3 und verläuft durch in den Klemmteilen 6, 7 vorgesehenen Bohrungen 16 (siehe Fig. 4). Günstigerweise können die Klemmteile 6, 7 aufgeklappt werden, wobei der Verbindungsbolzen 11 als Drehachse fungiert; durch diese Handhabung kann der Mitnehmer 2 sehr einfach an eine Rundgliedkette 1 montiert werden, indem er aufgeklappt an ein Kettenglied gebracht und durch Zuklappen montiert wird. Die Klemmteile 6, 7 sind dabei nur um den Verbindungsbolzen 11 beweglich, aber nicht in einer Richtung normal auf den Verbindungsbolzen 11. Siehe dazu Figuren 3a und 3b. Um eine lang anhaltende ordnungsgemäße Funktion des Verbindungsbolzens 11 sicherzustellen, kann dieser als Korrosionsschutz galvanisch verzinkt oder aus rostbeständigem Material hergestellt werden.

Grundsätzlich sind verschiedene Varianten denkbar: Einerseits kann der Verbindungsbolzen 11 starr mit einem der Klemmteile 6, 7 verbunden sein. Dies kann beispielsweise erfolgen, indem der Verbindungsbolzen 11 einseitig mitangeschmiedet wird oder aber eingeklebt, eingelötet oder angeschweißt wird. In diesem Fall ist nur einer der Klemmteile 6, 7 um den Verbindungsbolzen 11 frei aufklappbar. In einer weiteren Variante sind beide Klemmteile 6, 7 um den Verbindungsbolzen 11 verschwenkbar, wenn dieser formschlüssig in den Bohrungen in den Klemmteilen angeordnet ist. Grundsätzlich wäre es auch denkbar, die einzelnen Schmiedeteile zu durchbohren und einen langen Bolzen durchzuschieben, der in Längsrichtung formschlüssig gesichert ist.

Optional ist an dem Verbindungsbolzen 11 eine Feder 12 angeordnet, die zur Vorspannung der Klemmteile 6, 7 dient: Die Feder 12 wird dabei so montiert, dass die Klemmteile 6, 7 in einer Standardposition im "zugeklappten" Zustand fixiert sind, zum Aufklappen und Montieren des Mitnehmers 2 muss diese Vorspannung überwunden werden. Die Klemmteile 6, 7 halten mit dem Verbindungsbolzen 11 zusammen, wodurch ein Auseinanderfallen während Verarbeitung, Lagerung und Transport verhindert wird. Im vorliegenden Fall handelt es sich bei der Feder 12 um eine um den Verbindungsbolzen 11 gewickelte Schraubenfeder. Grundsätzlich wären aber auch andere Lösungen denkbar, beispielsweise eine Blattfeder, die die oben genannte Funktion erfüllt.

Die Figuren 3a und 3b zeigen eine perspektivische Darstellung eines erfindungsgemäßen Mitnehmers 2 im "aufgeklappten" (Fig. 3a) und im montierten (Fig. 3b) Zustand. In Fig. 3a ist aus dem Zustand der Feder 12 erkennbar, wie die Vorspannung der Feder 12 überwunden werden muss, um die Klemmteile 6, 7 um den Verbindungsbolzen 11 aufzuklappen. Die beiden Klemmteile 6, 7 sind völlig gleich gestaltet. Weiters ist zu erkennen, dass die Klemmteile 6, 7 Aufnahmen für die Feder 12 aufweisen, sodass diese im montierten Zustand die Klemmteile 6, 7 zusammenhält und somit ein ungewolltes Auseinandergleiten der Schmiedeteile verhindert.

Im aufgeklappten Zustand kann der Mitnehmer 2 auf ein Kettenglied 3 montiert werden, im montierten Zustand sind dann die Klemmteile 6, 7 wieder zusammengeklappt, wie aus Fig. 3b ersichtlich ist. Weiters ist hier erkennbar, dass zwar durch die Vorspannung der Feder 12 der Mitnehmer 2 an der Rundgliedkette 1 montiert wird, eine optimale Fixierung des Mitnehmers 2 an der Kette aber sichergestellt wird, indem ein Mitnehmerbauteil (in Fig. 3b ist ein Bauteilstück 15 ausschnittsweise dargestellt) über die Anschlussmittel an dem Mitnehmer fixiert wird: Durch das Festschrauben der Muttern 14 wird eine Klemmkraft eingebracht, die die Fixierung an der Rundgliedkette 1 sicherstellt, weil gleichzeitig ein Aufklappen der Klemmteile 6, 7 unmöglich gemacht wird. Durch das Anbringen des Bauteils werden die Klemmteile quasi arretiert und können nicht mehr aufgeklappt werden.

Grundsätzlich könnten die Klemmteile noch mit Schraubverbindungen durch die Mittelteile, wie sie aus dem Stand der Technik (z.B. EP 367 755 B1) bekannt sind, zusätzlich gesichert werden, wodurch allerdings der Mitnehmer 2 aus mehr Bauteilen bestehen würde.

Der Verbindungsbolzen 11 verhindert formschlüssig das Verdrehen der Klemmteile 6, 7 über den Gewindebolzen 13. Somit wird auch bei einer eventuellen ungewollten Lockerung der Befestigungsmuttern 14 ein Lösen des Mitnehmers 2 vom Kettenglied 3 verhindert.

Fig. 4 zeigt einen Schnitt durch einen erfindungsgemäßen Mitnehmer 2 entlang der Linie B-B in Fig. 2. Hier ist erkennbar, dass der Verbindungsbolzen 11 in Bohrungen 16, die hier als Sackbohrungen ausgeführt sind, angeordnet ist und im Wesentlichen durch die Feder 12 an seiner Position gehalten wird. Weiters ist ersichtlich, dass Breite bzw. Form der Klemmteile 6, 7 im Bereich der Mittelteile 10 so gewählt sind, dass die Nachbarglieder 4, 5 der Kette frei bezüglich des Kettengliedes 3 verschwenkbar sind, jedenfalls um einen Winkel, der ein Umlaufen der Rundgliedkette 1 über Antriebs- und/oder Umlenkräder ermöglicht.

Die Figuren 5 bis 8 zeigen eine Anwendung des erfindungsgemäßen Konzepts, bei dem sich ein Mitnehmer 2 über mehrere Kettenglieder erstreckt. Im vorliegenden Fall (Fig. 5) weist der Mitnehmer 2 zwei Klemmteile 6, 7 mit je zwei Mittelteilen 10', 10" mit je zwei Seitenstegen auf. Die Mittelteile 10', 10" greifen in die Öffnungen von benachbarten gleichgerichteten Kettengliedern 4, 5 ein, wobei zwischen den gleichgerichteten Kettenglieder 4, 5 ein gegengerichtetes Kettenglied 3 angeordnet ist. Im vorliegenden Fall sind hier die gleichgerichteten Kettenglieder 4, 5 als liegende Kettenglieder ausgebildet, während das gegengerichtete Kettenglied 3 als stehendes Kettenglied ausgebildet ist. Natürlich ist diese Einteilung rein willkürlich, auch eine genau entgegengesetzte Anordnung ist möglich. Der Klemmvorgang erfolgt genau so wie bei dem vorher beschriebenen Mitnehmer, der auf nur ein Kettenglied montiert ist (siehe auch Fig. 6).

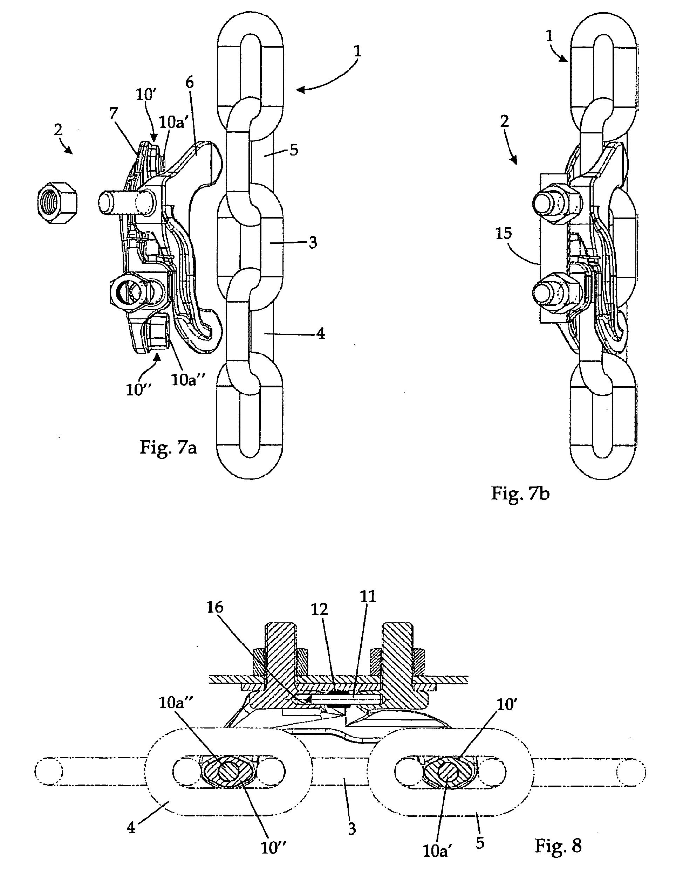

Die Figuren 7a und 7b zeigen einen Mitnehmer 2, der sich über mehrere Kettenglieder erstreckt, im aufgeklappten (Fig. 7a) und montierten (Fig. 7b) Zustand. Hier ist erkennbar, dass die Mittelteile 10', 10" der Klemmteile 6, 7 (wobei in Fig. 7a nur die Mittelteile 10', 10' eines Klemmteils 7 klar erkennbar sind) an ihrer dem jeweils anderen Mittelteil zugewandten Stirnseite speziell ausgestaltet sind: Ein erster Mittelteil 10' weist einen zapfenförmigen Abschnitt 10a' auf, während ein zweiter Mittelteil 10" eine Aufnahme 10a" für einen solchen zapfenförmigen Abschnitt aufweist. Beide Mittelteile 10', 10" befinden sich auf einem Klemmteil 7. Die Mittelteile des zweiten Klemmteils 6 sind nicht erkennbar, da allerdings die Klemmteile 6, 7 vorteilhafterweise gleich gestaltet sind, um den Produktionsaufwand gering zu halten, handelt es sich dabei jeweils um die komplementären Ausgestaltungen. Der erste Mittelteil 10' mit dem zapfenförmigen Abschnitt 10a' wirkt also mit einem Mittelteil zusammen, der eine Aufnahme für einen solchen zapfenförmigen Abschnitt aufweist, während eine solche Aufnahme 10a" für einen zapfenförmigen Abschnitt im zweiten Mittelteil 10" durch einen zapfenförmigen Abschnitt in einem Mittelteil des zweiten Klemmteil 6 komplettiert wird.

Grundsätzlich wäre es auch denkbar, die Mittelteile je Klemmteil jeweils gleich auszugestalten aber zwei Klemmteile mit komplementären Mittelteilen zu einem Mitnehmer zu kombinieren. Allerdings wäre dadurch ein höherer Aufwand in Produktion und Zusammenbau notwendig.

Diese spezielle Ausgestaltung der Mittelteile erlaubt eine bessere Fixierung der Klemmteile 6, 7 und dadurch eine erhöhte Betriebssicherheit. Natürlich ist die Ausgestaltung als Zapfen-Aufnahme-Paar nur eine von mehreren möglichen Ausführungsformen und soll keineswegs einschränkend für die vorliegende Erfindung sein. Einem Fachmann ist eine Vielzahl von komplementären, im Wesentlichen formschlüssigen Ausgestaltungen bekannt.

Fig. 8 zeigt einen Schnitt durch den Mitnehmer 2 aus Fig. 6 entlang der Linie D-D. Dabei sind wieder die Anordnung des Verbindungsbolzens 11 in Bohrungen 16 und die Ausgestaltung der Mittelteile 10', 10" erkennbar.

### BEZUGSZEICHENLISTE

- 1: Rundgliedkette
- 2: Mitnehmer
- 3: stehendes Kettenglied
- 4, 5: liegende Kettenglieder
- 6,7: Klemmteile
- 8: oberer Seitensteg
- 9: unterer Seitensteg
- 10,10',10": Mittelteil
- 11: Verbindungsbolzen
- 12: Feder
- 13: Gewindebolzen
- 14: Mutter
- 15: Bauteilstück
- 16: Bohrungen
- b: äußere Breite des Kettenglieds

## Patentansprüche

1. Mitnehmer zum Befestigen eines Bauteils, beispielsweise eines Bechers, an einer Rundgliedkette (1), die abwechselnd stehende und liegende Kettengliedern (3, 4, 5) aufweist, wobei der Mitnehmer (2) aus zwei Klemmteilen (6, 7) besteht, die über ein Verbindungsmittel miteinander verbindbar und im montierten Zustand beiderseits der Hauptebene eines stehenden oder liegenden Kettengliedes (3) angeordnet sind, wobei jeder Klemmteil (6, 7) zumindest zwei Seitenstege (8, 9) und mindestens einen in der Öffnung des Kettengliedes liegenden Mittelteil (10, 10', 10") aufweist, die Seitenstege (8, 9) die Längsschenkel des Kettengliedes (3) in ihrer Längsrichtung gesehen zumindest über einen Teil ihres Umfanges umfassen, und weiters zumindest ein Klemmteil (6, 7) an einem Seitensteg (8, 9) mit einem Anschlussmittel für den Bauteil versehen ist, wobei das Anschlussmittel, senkrecht zur Kettengliedhauptebene gesehen, außerhalb der äußeren Breite (b) des Kettengliedes liegt und bezüglich der Kettengliedmittelebene versetzt angeordnet ist, **dadurch gekennzeichnet, dass** als Verbindungsmittel für die Klemmteile ein Verbindungsbolzen (11) vorgesehen ist, der außerhalb des Kettengliedes (3) parallel zu dessen Längsschenkeln durch in den Klemmteilen (6, 7) vorgesehene Bohrungen (16) verläuft, und dass zumindest ein Klemmteil (6, 7) um die Achse des Verbindungsbolzens (11) drehbar ist, wobei die Klemmteile (6, 7) im montierten Zustand durch Befestigen eines Bauteils an dem zumindest einen Anschlussmittel gegen Verdrehen um den Verbindungsbolzen fixierbar sind.

2. Mitnehmer nach Anspruch 1, **dadurch gekennzeichnet, dass** der Verbindungsbolzen (11) mit einem Klemmteil (6, 7) starr verbunden ist.

3. Mitnehmer nach Anspruch 1, **dadurch gekennzeichnet, dass** beide Klemmteile (6, 7) um den Verbindungsbolzen (11) drehbar sind.

4. Mitnehmer nach einem der Ansprüche 1 bis 3, **dadurch gekennzeichnet, dass** der Verbindungsbolzen (11) zwischen dem Kettenglied (3) und dem Anschlussmittel angeordnet ist.

5. Mitnehmer nach einem der Ansprüche 1 bis 4, **dadurch gekennzeichnet, dass** die Klemmteile (6, 7) im Wesentlichen gleich ausgebildet sind und jeweils mit einem Anschlussmittel für den Bauteil versehen sind.

6. Mitnehmer nach einem der Ansprüche 1 bis 5, **dadurch gekennzeichnet, dass** es sich bei den Anschlussmitteln um Gewindebolzen (13) handelt.

7. Mitnehmer nach einem der Ansprüche 1 bis 6, **dadurch gekennzeichnet, dass** die Bohrungen in den Klemmteilen (6, 7) zur Aufnahme des Verbindungsbolzens (11) als Sackbohrungen ausgerührt sind.

8. Mitnehmer nach einem der Ansprüche 1 bis 7, **dadurch gekennzeichnet, dass** eine Feder (12) vorgesehen ist, welche die Klemmteile (6, 7) in einer Ausgangsposition hält, die dem montierten Zustand entspricht, wobei die Feder (12) eine Vorspannung ausübt, die überwunden werden muss um die Klemmteile (6, 7) um den Verbindungsbolzen (11) aufzuklappen.

9. Mitnehmer nach Anspruch 8, **dadurch gekennzeichnet, dass** es sich bei der Feder (12) um eine um den Bolzen (11) gewickelte Schraubenfeder handelt.

10. Mitnehmer nach einem der Ansprüche 1 bis 9, **dadurch gekennzeichnet, dass** sich der Mitnehmer (2) über mehrere Kettenglieder (3, 4, 5) erstreckt und je Klemmteil (6, 7) mindestens zwei Mittelteile (10',10") mit je zwei Seitenstegen vorgesehen sind, wobei die Mittelteile (10',10") in die Öffnungen von benachbarten gleichgerichteten Kettengliedern (4, 5) eingreifen.

11. Mitnehmer nach einem der Ansprüche 1 bis 10, **dadurch gekennzeichnet, dass** zumindest ein Mittelteil (10') je Klemmteil (6, 7) einen zapfenförmigen Abschnitt (10a') aufweist und/ oder mindestens ein Mittelteil (10") desselben Klemmteils (6, 7) eine Aufnahme (10a") für einen solchen zapfenförmigen Abschnitt aufweist, wobei bei einem Mitnehmer im montierten Zustand jeweils Mittelteile mit zapfenförmigem Abschnitt (10a') des einen Klemmteils mit Mittelteilen mit Aufnahmen (10a") für zapfenförmige Abschnitte des anderen Klemmteils zusammenwirken.

12. Mitnehmer nach Anspruch 11, rückbezogen auf Anspruch 10, **dadurch gekennzeichnet, dass** die zumindest zwei Mittelteile (10', 10") je Klemmteil (6, 7) verschieden ausgeführt sind, sodass zumindest ein, Mittelteil (10') einen zapfenförmigen Abschnitt (10a') aufweist und zumindest ein Mittelteil (10") eine Aufnahme (10a") für einen solchen zapfenförmigen Abschnitt aufweist.

## Claims

1. Retainer for attachment of device such as a cup to a round-link chain (1) which comprises vertical and horizontal chain links (3, 4, 5) in an alternating manner,
said retainer (2) being constituted of two clamping parts (6, 7) which are mutually connectable via connecting means and are, in a mounted state, positioned on either side of the main plane of a vertical or horizontal chain link (3),
wherein each clamping part (6, 7) comprises at least two lateral webs (8, 9) and at least one intermediary portion (10, 10', 10") situated within the opening of the chain link, the lateral webs (8, 9) enclosing the longitudinal sections of the chain link (3) with regard to at least part of their circumferences as seen along the longitudinal direction thereof, and furthermore at least one of the clamping parts (6, 7) is, at its lateral web (8, 9), provided with an connector element for said device, wherein said connector element, when viewed perpendicular to the main plane of the chain link, is located outside of the outer width (b) of the chain link and is arranged displaced with regard to the median plane of the chain link,
**characterized in that**
as connecting means for the clamping parts a connecting pin (11) is provided, which extends outside of the chain link (3) parallel to the longitudinal section of the latter permeating holes (16) provided in the clamping parts (6, 7), and at least one clamping part (6, 7) is pivotable around the axis of the connecting pin (11),
the clamping parts (6, 7) being adapted to be secured against turning around the connecting pin by attaching a device to the at least one connector element.

2. Retainer according to claim 1, **characterised in that** the connecting pin (11) is rigidly connected with a clamping part (6, 7).

3. Retainer according to claim 1, **characterized in that** both clamping parts (6, 7) are rotatable around the connecting pin (11).

4. Retainer according to any one of claims 1 to 3, **characterized in that** the connecting pin (11) is arranged between the chain link (3) and the connector element.

5. Retainer according to any one of claims 1 to 4, **characterized in that** the clamping parts (6, 7) have substantially equal configuration and are each provided with a connector element for said device.

6. Retainer according to any one of claims 1 to 5, **characterized in that** the connector element(s) are realized as threaded studs (13).

7. Retainer according to any one of claims 1 to 6, **characterized in that** the holes in the clamping parts (6, 7) are configured as blind holes for receiving the connecting pin (11).

8. Retainer according to any one of claims 1 to 7, **characterized in that** a spring (12) is provided which maintains the clamping parts (6, 7) in a home position corresponding to the mounted state, wherein the spring (12) is exerting a primary tension which requires being surmounted in order to turn open the clamping parts (6, 7) around the connecting pin (11).

9. Retainer according to claim 8, **characterized in that** the spring (12) is realized as a coil spring wound about the pin (11).

10. Retainer according to any one of claims 1 to 9, **characterized in that** the retainer (2) extends over several chain links (3, 4, 5), and for each clamping part (6, 7) at least two intermediary portions (10', 10") are provided, each having two lateral webs, the intermediary portions (10', 10") engaging into openings of adjacent chain links (4, 5) of same orientation.

11. Retainer according to any one of claims 1 to 10, **characterized in that** at least one intermediary portion (10') comprises a tenon-shaped section (10') for a respective clamping part (6, 7) and/or at least one intermediary portion (10") of the same clamping part (6, 7) comprises a mortise (10a") for such tenon-shaped section, wherein in a mounted state intermediary portions having a tenon-shaped section (10a') of one clamping part respectively cooperate with intermediary portions having mortises (10a") for a tenon-shaped section of the other clamping part.

12. Retainer according to claim 11 referencing claim 10, **characterized in that** the at least two intermediary portions (10', 10") for each clamping part (6, 7) are configured differently, such that at least one intermediary portion (10') comprises a tenon-shaped section (10') and at least one intermediary portion (10") comprises a mortise (10a") for such tenon-shaped section.

## Revendications

1. Entraîneur destiné à la fixation d'un composant, par exemple d'une coupe, sur une chaîne à maillons ronds (1) qui présente des maillons chaîne (3, 4, 5) alternativement verticaux et horizontaux, l'entraîneur (2) se composant de deux parties de serrage (6, 7) qui peuvent être reliées par un moyen de liaison et sont disposées à l'état monté de part et d'autre du plan principal d'un maillon de chaîne vertical ou horizontal (3), chaque partie de serrage (6, 7) présentant au moins deux nervures latérales (8, 9) et au moins une partie médiane (10, 10', 10") se trouvant dans l'ouverture du maillon de chaîne, les nervures latérales (8, 9) comportant les branches longitudinales du maillon de chaîne (3), vu dans leur sens longitudinal, au moins sur une partie de leur périphérie, et au moins une partie de serrage (6, 7) étant en outre pourvue sur une nervure latérale (8, 9) d'un moyen de raccordement pour le composant, le moyen de raccordement se trouvant, vu perpendiculairement au plan principal de maillon de chaîne, en dehors de la largeur extérieure (b) du maillon de chaîne et étant disposé en déport du plan médian de maillon de chaîne, **caractérisé en ce qu'**un boulon de liaison (11) qui s'étend en dehors du maillon de chaîne (3) parallèlement à ses branches longitudinales par des perçages (16) prévus dans les parties de serrage (6, 7) est prévu comme moyen de liaison pour les parties de serrage, et **en ce qu'**au moins une partie de serrage (6, 7) peut être tournée autour de l'axe du boulon de liaison (11), les parties de serrage (6, 7) pouvant être immobilisées à l'état monté par fixation d'un composant sur l'au moins un moyen de raccordement pour éviter leur rotation autour du boulon de liaison.

2. Entraîneur selon la revendication 1, **caractérisé en ce que** le boulon de liaison (11) est rigidement relié à une partie de serrage (6, 7).

3. Entraîneur selon la revendication 1, **caractérisé en ce que** les deux parties de serrage (6, 7) peuvent être tournées autour du boulon de liaison (11).

4. Entraîneur selon l'une quelconque des revendications 1 à 3, **caractérisé en ce que** le boulon de liaison (11) est disposé entre le maillon de chaîne (3) et le moyen de raccordement.

5. Entraîneur selon l'une quelconque des revendications 1 à 4, **caractérisé en ce que** les parties de serrage (6, 7) sont réalisées sensiblement identiques et sont respectivement pourvues d'un moyen de raccordement pour le composant.

6. Entraîneur selon l'une quelconque des revendications 1 à 5, **caractérisé en ce qu'**il s'agit de boulons filetés (13) pour les moyens de raccordement.

7. Entraîneur selon l'une quelconque des revendications 1 à 6, **caractérisé en ce que** les perçages sont réalisés dans les parties de serrage (6, 7) pour la réception du boulon de liaison (11) comme des perçages borgnes.

8. Entraîneur selon l'une quelconque des revendications 1 à 7, **caractérisé en ce qu'**un ressort (12) est prévu, lequel maintient les parties de serrage (6, 7) dans une position de départ qui correspond à l'état monté, le ressort (12) exerçant une précontrainte qui doit être surmontée afin de replier les parties de serrage (6, 7) autour du boulon de liaison (11).

9. Entraîneur selon la revendication 8, **caractérisé en ce qu'**il s'agit pour le ressort (12) d'un ressort cylindrique enroulé autour du boulon (11).

10. Entraîneur selon l'une quelconque des revendications 1 à 9, **caractérisé en ce que** l'entraîneur (2) s'étend sur plusieurs maillons de chaîne (3, 4, 5) et au moins deux parties médianes (10', 10") avec chacune deux nervures latérales sont prévues par partie de serrage (6, 7), les parties médianes (10', 10") s'engageant dans les ouvertures de maillons de chaîne (4, 5) contiguës, dirigées dans le même sens.

11. Entraîneur selon l'une quelconque des revendications 1 à 10, **caractérisé en ce qu'**au moins une partie médiane (10') par partie de serrage (6, 7) présente une section en forme de tenon (10a') et/ou au moins une partie médiane (10") de la même partie de serrage (6, 7) présente un logement (10a") pour une telle section en forme de tenon, pour un entraîneur à l'état monté, respectivement des parties médianes avec une section en forme de tenon (10a') d'une partie de serrage coagissant avec des parties médianes avec des logements (10a") pour des sections en forme de tenon de l'autre partie de serrage.

12. Entraîneur selon la revendication 11, relative à la revendication 10, **caractérisé en ce que** lesdits au moins deux parties médianes (10', 10") par partie de serrage (6, 7) sont réalisées différemment de sorte qu'au moins une partie médiane (10') présente une section (10a') en forme de tenon et au moins une partie médiane (10") présente un logement (10a") pour une telle section en forme de tenon.
